# EUROPÄISCHE PATENTSCHRIFT

(11) **EP 1 927 185 B1**
(45) Veröffentlichungstag und Bekanntmachung des Hinweises auf die Patenterteilung: **06.03.2013**
(21) Anmeldenummer: 05791225.5
(22) Anmeldetag: 22.09.2005
(51) Int. Cl.: H02M 7/757, H02J 3/36

(54) **REGELUNGSVERFAHREN FÜR DIE GLEICHSTROMÜBERTRAGUNG**
CONTROL METHOD FOR TRANSMITTING DIRECT CURRENT
PROCEDE DE REGLAGE POUR LA TRANSMISSION DE COURANT CONTINU

(43) Veröffentlichungstag der Anmeldung: 04.06.2008
(73) Patentinhaber: SIEMENS AKTIENGESELLSCHAFT, 80333 München (DE)
(72) Erfinder: KARLECIK-MAIER, Franz, 91315 Höchstadt (DE)
(86) Internationale Anmeldenummer: PCT/DE2005/001709
(87) Internationale Veröffentlichungsnummer: WO 2007/033620

(56) Entgegenhaltungen:
- EP-A- 0 087 640
- EP-A- 0 688 081
- DE-A1- 2 901 263
- DE-C1- 19 544 777
- US-A- 4 264 951

## Beschreibung

Die vorliegende Erfindung betrifft ein Verfahren zum Regeln eines Gleichrichters und eines Wechselrichters, die über einen Gleichstromkreis miteinander verbunden sind im Bereich der Energieverteilung und -übertragung, bei dem an wenigstens einer Messestelle des Gleichstromkreises jeweils eine Messgleichspannung und jeweils ein Messgleichstrom gemessen werden und an eine Gleichrichterregelung zur Regelung des Gleichrichters und/oder an eine Wechselrichterreglung zur Regelung des Wechselrichters übertragen werden, wobei die Gleichrichterregelung und die Wechselrichterregelung jeweils die Differenz zwischen einer vorgegebenen Sollgleichspannung und der jeweils empfangenen Messgleichspannung unter Gewinnung einer Differenzgleichspannung und ferner die Differenz zwischen einem Sollgleichstrom und dem jeweils empfangenen Messgleichstrom unter Gewinnung eines Differenzgleichstroms bilden, wobei die Differenzgleichspannung und der Differenzgleichstrom normiert vorliegen und der Gleichrichterregelung den Gleichrichter so regelt, dass die Summe der Differenzgleichspannung und des Differenzgleichstroms minimal wird, und wobei der Wechselrichterregelung den Wechselrichter so regelt, dass die Differenz zwischen dem Differenzgleichstrom und der Differenzgleichspannung minimal wird.

Ein solches Verfahren ist beispielsweise aus der DE 195 44 777 C1 oder der EP 0 688 081 A1 bereits bekannt. Das dort beschriebene Verfahren dient zur Regelung einer so genannten Hochspannungsgleichstromübertragungsanlage, die aus mehreren Umrichtern besteht, wobei die Umrichter wahlweise als Wechselrichter oder Gleichrichter betrieben werden können. Dabei sind die Umrichter über eine Gleichstromverbindung miteinander verbunden. Zur Kopplung der Umrichter mit einem jeweils zugeordneten Energieverteilungsnetz sind Transformatoren vorgesehen. Bei der Regelung der Gleich- oder des Wechselrichters werden die Gleichströme und Gleichspannungen an den jeweiligen Umrichtern als Messgrößen erfasst. Ferner werden für jeden Umrichter Sollwertepaare in Form von Sollstrom und Sollspannung festgelegt. Jede Regelung berechnet eine diesbezügliche Regelabweichung, bildet also mit andern Worten die Differenz zwischen Mess- und Sollwerten. Die Regelung des Gleichrichters erfolgt so, dass die Summe der Regelabweichungen minimal wird. Der Wechselrichter wird hingegen so geregelt, dass die Differenz der Regelabweichungen minimal wird. Nachteilig bei dem vorbekannten Verfahren ist, dass eine übergeordnete Regelungsebene erforderlich ist. Eine hierarchische Regelungsstruktur ist jedoch aufwändig und kann zu unerwünschten Instabilitäten führen.

Ein in der EP 0 087 640 B1 als Marginalstromverfahren bezeichnetes Verfahren dient zur Regelung einer Hochspannungsgleichstromübertragungsanlage, die aus einem Wechselrichter sowie einem Gleichrichter besteht, wobei der Wechselrichter und der Gleichrichter über einen Gleichstromkreis miteinander verbunden sind. Der Gleichrichter ist über einen Transformator mit einem energiespeisenden Wechselspannungsnetz verbunden, wobei der Wechselrichter über einen weiteren Transformator mit einem zu versorgenden Wechselspannungsnetz gekoppelt ist. Zur Regelung des Gleich- beziehungsweise des Wechselrichters dient das so genannte Marginalstromverfahren. Hierzu werden sowohl am Gleichrichter als auch am Wechselrichter jeweils eine Messgleichspannung und ein Messgleichstrom gemessen und die gemessenen Messgrößen an eine Gleichrichterregelung beziehungsweise eine Wechselrichterregelung übertragen.

Die Wechselrichterregelung weist eine Gammaregelung, eine Spannungsregelung und eine Marginalstromregelung auf, wobei diese Regelungen unter Einsatz einer geeigneten Regelablösung miteinander konkurrieren. Der Einsatz unterschiedlicher Regelungen unter Verwendung einer Regelablösung kann jedoch zu unerwünschten Instabilitäten führen.

Weitere Marginalstromregelverfahren für fremdgeführte Umrichter mit Thyristorventilen sind beispielsweise in der US 4,264,951 oder der DE 29 01 263 beschrieben.

Aufgabe der vorliegenden Erfindung ist es daher ein Verfahren der eingangs genannten Art bereitzustellen, das eine hohe Dynamik aufweist und gleichzeitig zuverlässig stabil arbeitet.

Die Erfindung löst diese Aufgabe dadurch, dass der Sollstrom der Gleichrichterregelung und der Sollstrom der Wechselrichterregelung identisch sind.

Erfindungsgemäß wird sowohl eine hierarchische Struktur des Regelverfahrens als auch eine Minimal- oder Maximalauswahl zur Festlegung der grundsätzlichen Regelung vermieden. Stattdessen wird im Rahmen der Erfindung koordiniert ein bestimmter Arbeitspunkt angesteuert, wobei auch solche Erfordernisse berücksichtigt werden können, die maßgeblich von den Wechselspannungsnetzen mitbestimmt sind. Bei dem erfindungsgemäßen Regelungsverfahren werden Strom- und Spannungsregelung kombiniert. Dies erfolgt im Rahmen der Gleichrichterregelung durch Addition einer normierten Differenzgleichspannung mit einem normierten Differenzgleichstrom. Die sich ergebende Summe wird schließlich der eigentlichen Regeleinheit des Gleichrichters zugeführt. Am Wechselrichter wird stattdessen die Differenz zwischen dem Differenzgleichstrom und der Differenzgleichspannung gebildet und diese an die Regeleinheit übergeben. Es sei darauf hingewiesen, dass die Messwerte beispielsweise mittels Stromwandler beziehungsweise Spannungswandler erfasst werden, deren Ausgangssignal einer überwachten Gleichspannung, beispielsweise 500 kV, beziehungsweise einem von dieser Gleichspannung getriebenen Gleichstrom, beispielsweise 3000 A, jeweils proportional ist. Das Ausgangssignal des Stromwandlers beziehungsweise des Spannungswandlers werden schließlich durch eine Abtasteinheit unter Gewinnung von Abtastwerten abgetastet und die Abtastwerte über einen Analog-Digitalwandler in digitale Messwerte umgewandelt. Mit anderen Worten handelt es sich bei der Messgleichspannung und dem Messgleichstrom beispielsweise um digitale Messwerte, die der jeweiligen Regelung zugeführt und von dessen Software weiterverarbeitet werden.

Erfindungsgemäß sind - im Gegensatz zum Stand der Technik - der Sollstrom der Gleichrichterregelung und der Sollstrom der Wechselrichterregelung identisch. Bei einer zweckmäßigen Weiterentwicklung der Erfindung sind die Sollspannung der Gleichrichterregelung und die Sollspannung der Wechselrichterregelung identisch. Der oder die jeweiligen Sollwerte sind auf eine beliebige elektrische Stelle im Gleichstromkreis bezogen. Eine übergeordnete Regelungsebene, wie beispielsweise beim vorbekannten Marginalstromverfahren, und somit eine hierarchische Regelungsstruktur ist im Rahmen der Erfindung vermieden. Die über den Gleichstromkreis abfallende Spannungsdifferenz zwischen dem Gleichrichter und dem Wechselrichter stellt sich im Rahmen der vorliegenden Erfindung selbsttätig ein. Diese selbsttätige Einstellung hat immense Vorteile gegenüber vorbekannten Verfahren mit einer zusätzlichen übergeordneten Regelung. Die Regelung im Rahmen der Erfindung ist daher gegenüber dem Stand der Technik einfacher und zuverlässiger geworden.

Sollstrom und/oder Sollspannung liegen normiert vor und werden hierfür beispielsweise auf Nennwerte bezogen.

Vorteilhafterweise werden Sollspannung und Sollstrom aus einer gemeinsamen Sollgleichleistung bestimmt. Diese Sollgleichleistung kann beispielsweise auf eine gedachte virtuelle elektrische Mitte des Gleichstromkreises bezogen sein.

Vorteilhafterweise erfolgt die Regelung des Gleichrichters und des Wechselrichters über den gesamten Arbeitbereich des Gleichrichters beziehungsweise des Wechselrichters hinweg sowohl auf der Grundlage des Differenzgleichstromes di als auch auf der Grundlage der Differenzgleichspannung du. Eine wie auch immer ausgestaltete Begrenzung der Regelung auf die Summe oder die Differenz aus Differenzgleichstrom und Differenzgleichspannung entfällt gemäß dieser zweckmäßigen Weiterentwicklung. Eine Regelablösung ist daher vermieden und die Stabilität des Verfahrens weiter erhöht.

Vorteilhafterweise sind der Gleichrichter und der Wechselrichter unter Ausbildung einer Kurzkupplung räumlich nebeneinander aufgestellt, wobei die Messgleichspannung und der Messgleichstrom an einer Messstelle erfasst und sowohl an den Gleichrichterregelung als auch an den Wechselrichterregelung übertragen werden. Bei dieser vorteilhaften Weiterentwicklung sind die Strom- und Spannungswerte am Wechselrichter beziehungsweise am Gleichrichter nahezu identisch, so dass nur an einer Messstelle Messwerte erfasst werden müssen. Der erfasste Messgleichstrom und die erfasste Messgleichspannung werden sowohl an die Gleichrichterregelung als auch an die Wechselrichterregelung übertragen und dort weiterverarbeitet.

Bei einer hiervon abweichenden Weiterentwicklung der Erfindung sind der Gleichrichter und der Wechselrichter unter Ausbildung einer Gleichstromfernübertragungsanlage wenigstens 1 km entfernt voneinander aufgestellt, wobei die Messgleichspannung und der Messgleichstrom einmal am Gleichrichter unter Gewinnung einer Gleichrichtermessgleichspannung und eines Gleichrichtermessgleichstromes und einmal am Wechselrichter unter Gewinnung einer Wechselrichtermessgleichspannung und eines Wechselrichtermessgleichstromes erfasst werden, wobei die Gleichrichtermessgleichspannung und der Gleichrichtermessgleichstrom an den Gleichrichterregelung und die Wechselrichtermessgleichspannung und der Wechselrichtermessgleichstrom an den Wechselrichterregelung übertragen werden. Gemäß dieser Weiterentwicklung des erfindungsgemäßen Verfahrens ist eine Fernübertragung elektrischer Leistung als klassisches Anwendungsgebiet einer Gleichstromübertragungsanlage ermöglicht. Dabei sind der Wechselrichter und der Gleichrichter in der Regel über mehrere hundert Kilometer getrennt voneinander aufgestellt und über einen entsprechend langen Gleichstromkreis miteinander verbunden. Der Gleichstromkreis weist üblicherweise eine Glättungsdrossel zum Glätten des Gleichstromes auf. Auf diese Weise ist eine Leistungsübertragung über längere Strecken mit geringen Verlusten ermöglicht. Dabei werden die zur Regelung notwendigen Messgleichströme und Messgleichspannungen an verschiedenen Messstellen erfasst, nämlich zum einen am oder in der Nähe des Wechselrichters und zum anderen am Gleichrichter oder in der Nähe desselben. Unter Messstelle ist im Rahmen der Erfindung nicht der genau identische Ort der eigentlichen Erfassungsstelle gemeint. Im Rahmen der Erfindung können die Geräte zur Strom- beziehungsweise Spannungserfassung durchaus auch einige Meter entfernt voneinander aufgestellt sein. Wesentlich ist jedoch, dass die an einer Messstelle erfassbaren Betriebsgrößen im Rahmen Messungenauigkeit im Wesentlichen gleich sind.

Bei der mit der erfindungsgemäßen Weiterentwicklung durchführbaren Gleichstromfernübertragung werden die jeweils benötigten Sollwerte, wie beispielsweise eine Sollgleichspannung mittels Datenfernübertragungsmittel vom Wechselrichter zum Gleichrichter übertragen. Zweckmäßige Datenfernübertragungsmittel umfassen sowohl leitungsgeführte Übertragungsmittel, wie beispielsweise das Internet oder die Kommunikation über Hochspannungsleitungen, als auch nicht geführte Übertragungsmittel, wie beispielsweise Funkgeräte oder dergleichen.

Zweckmäßigerweise weisen der Gleichrichter und der Wechselrichter jeweils eine Brückenschaltung aus Thyristorventilen auf. Thyristorventile arbeiten im Vergleich zu anderen Leistungshalbleiterventilen verlustarm und kommen insbesondere bei der Hochspannüngsgleichstromübertragung zum Einsatz.

Vorteilhafterweise werden die Sollgleichspannung und der Sollgleichstrom aus einer geforderten Sollgleichleistung bestimmt. Zu dieser Bestimmung wird beispielsweise ein Funktionsgeber verwendet, der ausgehend von der Leistung anhand einer vorgegebenen Kennlinie eine Sollspannung festlegt. Die Kennlinie des Funktionsgebers ist von der Grundstruktur der gesamten Vorrichtung zur Durchführung des Verfahrens, also der Grundstruktur des Wechselrichters des Gleichrichters und des Gleichstromkreises abhängig und wird basierend auf Erfahrungswerten festgelegt. Aus der durch den Funktionsgeber bestimmten Sollgleichspannung wird durch übliche Division der Sollgleichleistung durch die Sollgleichspannung der Sollgleichstrom berechnet, wobei anschließend die Differenzgleichspannung und der Differenzgleichstrom beispielsweise mittels eines einfachen Addierers gebildet werden. Der Vorteil dieser Vorgehensweise ist darin zu sehen, dass vom Anwender lediglich die gewünschte Übertragungsleistung anzugeben ist, wobei die weitere Regelung auf diese Übertragungsleistung dann selbsttätig erfolgt.

Zweckmäßigerweise werden der auf einen Nennstrom normierte Messgleichstrom und die auf eine Nennspannung normierte Messgleichspannung auf den ebenfalls auf den Nennstrom normierten Sollgleichstrom beziehungsweise auf die ebenfalls auf die Nennspannung normierte Sollgleichspannung umnormiert, wobei der Differenzgleichstrom als Differenz zwischen 1 und den auf den Sollgleichstrom normierten Messgleichstrom und die Differenzgleichspannung als Differenz zwischen 1 und der auf die Sollgleichspannung normierten Messgleichspannung berechnet werden. Gemäß dieser vorteilhaften Weiterentwicklung wird unter Beibehaltung der geforderten Übertragungsleistung, also der Sollgleichleistung, eine Umnormierung der Werte vorgenommen. Durch diese Umnormierung ergeben sich insbesondere Vorteile im Schwachlastbetrieb. So tritt bei dem Marginalstromverfahren gemäß dem Stand der Technik selbst bei starken Wechselspannungsnetzen, also bei Wechselspannungsnetzen mit einem hohen so genannten Short Circuit Ratio, dem Verhältnis der Netzkurzschlussleistung zur Nennleistung der Gleichstromübertragungsanlage, ein nachteiliges Regelverhalten im Schwachlastbereich auf. Ein hohes Short Circuit Ratio liegt beispielsweise bei 5. Die erfindungsgemäße Weiterentwicklung ermöglicht hingegen selbst im Schwachlastbereich ein schnelles Anfahren der gewünschten Arbeitspunkte.

Vorteilhafterweise wird am Wechselrichter ein Messlöschwinkel gemessen und an eine Gammaregelung übertragen, wobei die Gammaregelung den Messlöschwinkel mit einem Solllöschwinkel vergleicht und, wenn der Messlöschwinkel den Solllöschwinkel unterschreitet, einen gegenüber der vorgegebenen Sollgleichspannung herabgesetzten Gleichspannungssollwert erzeugt, wobei die Wechselrichterregelung anschließend auf den Gleichspannungssollwert regelt. Gemäß dieser Weiterentwicklung der Erfindung ist eine Gammaregelung bereitgestellt, um Kommutierungsfehler beim Zünden der Stromrichterventile des Wechselrichters sicher zu vermeiden. Im Gegensatz zum Stand der Technik wird jedoch eine konkurrierende Regelung unter Einsatz einer Minimal- oder Maximalauswahl zwischen einer Gamma-regelung und beispielsweise einer Stromregelung im Rahmen der Erfindung vermieden. Die Gammaregelung ist erfindungsgemäß im Normalbetrieb der zu regelnden Anlage nicht wirksam. Ein Gammaregler der Gammaregelung verharrt dazu beispielsweise auf der von einem Benutzer des Verfahrens eingestellten Sollgleichspannung. Hierzu wird der Gammaregler beispielsweise nach oben auf diese eingestellte Sollgleichleistung begrenzt. Kommt es zur Unterschreitung des eingestellten Solllöschwinkels wird von dem Gammaregler hingegen eine gegenüber der ursprünglich eingestellten Sollgleichspannung verringerte oder herabgesetzte Sollgleichspannung bestimmt, die dann der weiteren Regelung zu Grunde gelegt wird. Der Gammaregler weist zweckmäßigerweise auch eine untere Regelungsbegrenzung auf, die sicherstellt, dass die herabgesetzte Sollgleichspannung einen unteren Schwellenwert nicht unterschreitet.

Eine weitere vorteilhafte Weiterentwicklung der Erfindung weist einen Begrenzungsregler auf, der einen Gleichrichterregler der Gleichrichterregelung nach oben hin begrenzt, so dass ein vorgegebener Maximalstrom und/oder eine vorgegebene Maximalspannung nicht überschritten werden. Die beispielsweise im Fehlerfall durchgreifende Begrenzung dient zur Sicherheit der geregelten Anlagen und zur zusätzlichen Stabilisierung des erfindungsgemäßen Verfahrens.

Gemäß einer diesbezüglich zweckmäßigen Weiterentwicklung begrenzt der Begrenzungsregler den Gleichrichterregler, wenn der Messgleichstrom größer ist als die Summe aus dem Sollgleichstrom und einer vorbestimmten Differenzgleichstromabweichung oder wenn die Messgleichspannung größer ist als die Summe aus der Sollgleichspannung und einer vorbestimmten Differenzspannungsabweichung. Die Differenzgleichstromabweichung und die Differenzspannungsabweichung ermöglichen das Einrichten eines beliebigen Toleranzbereiches, in dem ein Abweichen des jeweiligen Messwertes von dem zugeordneten Sollwert erlaubt ist, ohne dass die weiter oben beschriebene Begrenzung der Gleichrichterregelung eingreift.

Gemäß einer zweckmäßigen Weiterentwicklung wird bei abfallender Messgleichspannung eine Sollgleichleistung in Abhängigkeit der Messgleichspannung auf einen kleineren Wert unter Gewinnung einer Fehlerfallsollgleichleistung herabgesetzt, wobei der Sollgleichstrom und/oder die Sollgleichspannung anstatt aus einer Sollgleichleistung aus der Fehlerfallsollgleichleistung bestimmt werden. Das Herabsetzen der Sollgleichleistung dient zur Regelung der Gleichstromübertragungsanlage im Fehlerfall, in dem beispielsweise ein Spannungseinbruch in einem der Wechselspannungsnetze oder im Gleichstromkreis vorliegt.

Gemäß einer diesbezüglich zweckmäßigen Weiterentwicklung erfolgt das Festlegen der Fehlerfallsollgleichleistung unter Verwendung eines Funktionsgebers, der mit einer auf Erfahrungswerten beruhenden Kennlinie versehen ist. Dabei wird die Messgleichspannung geglättet und dem Funktionsgeber zugeführt. Die Glättung der Messgleichspannung ist in der Regel notwendig, da die Messgleichspannung im Fehlerfall stark schwanken kann. Der Funktionsgeber erzeugt in Abhängigkeit der geglätteten Messgleichspannung eine Fehlerfallbegrenzungsleistung. Diese dient zweckmäßigerweise zur Begrenzung des Ausgangswertes eines Integrators nach oben hin, wobei der Ausgangswert des Integrators die Fehlerfallsollgleichleistung ist. Der Ausgang des Integrators wird zur Bestimmung der Sollgleichspannung und des Sollgleichstromes verwendet. Im Normalbetrieb ist der Ausgangswert des Integrators gleich der vom Benutzer eingestellten Sollgleichleistung, mit anderen Worten die Fehlerfallbehandlung inaktiv. Fällt die Messgleichspannung hingegen unter einen vorbestimmten Schwellenwert, erzeugt der Funktionsgeber eine gegenüber der Sollgleichleistung reduzierte Fehlerfallbegrenzungsleistung. Diese ist dann zunächst der Ausgangswert des Integrators und somit gleichzeitig die Fehlerfallsollgleichleistung. Steigt die geglättete Messgleichspannung am Eingang des Funktionsgebers an, erzeugt dieser eine erhöhte Fehlerfallbegrenzungsleistung als obere Begrenzung des Integrators. Der Integrator integriert dann auf die erhöhte Fehlerfallbegrenzungsleistung mit einer beispielsweise einstellbaren Integrationsgeschwindigkeit hoch. Bei einem bevorzugten Ausführungsbeispiel wird die Integrationsgeschwindigkeit von der Art und der Höhe der Schwankung der Messgleichspannung abhängig gemacht. Dabei dient die Schwankung der Messgleichspannung als Hinweis darauf, ob ein beliebiger Fehler immer noch vorliegt oder bereits beseitigt wurde.
Das erfindungsgemäße Verfahren ist sowohl für die Hochspannungsgleichstromübertragung, die Mittelspannungsgleichstrom-übertragung als auch für die Niederspannungsgleichstromübertragung geeignet.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleich Bezugszeichen auf gleich wirkende Bauteile verweisen und wobei
- Figur 1: ein Ausführungsbeispiel des erfindungsgemäßen Verfahrens schematisch verdeutlicht,
- Figur 2: eine Weiterentwicklung des Verfahrens gemäß Figur 1 zeigt,
- Figur 3: eine Weiterentwicklung des Verfahrens gemäß Figur 2 zeigt,
- Figur 4: eine Weiterentwicklung des Verfahrens gemäß Figur 3 zeigt,
- Figur 5: eine Detailansicht der Weiterentwicklung gemäß Figur 4 und
- Figur 6: eine schematische Darstellung eines weiteres Ausführungsbeispiels des erfindungsgemäßen Verfahrens für eine Hochspannungsgleichstromfernübertragungsanlage zeigt.

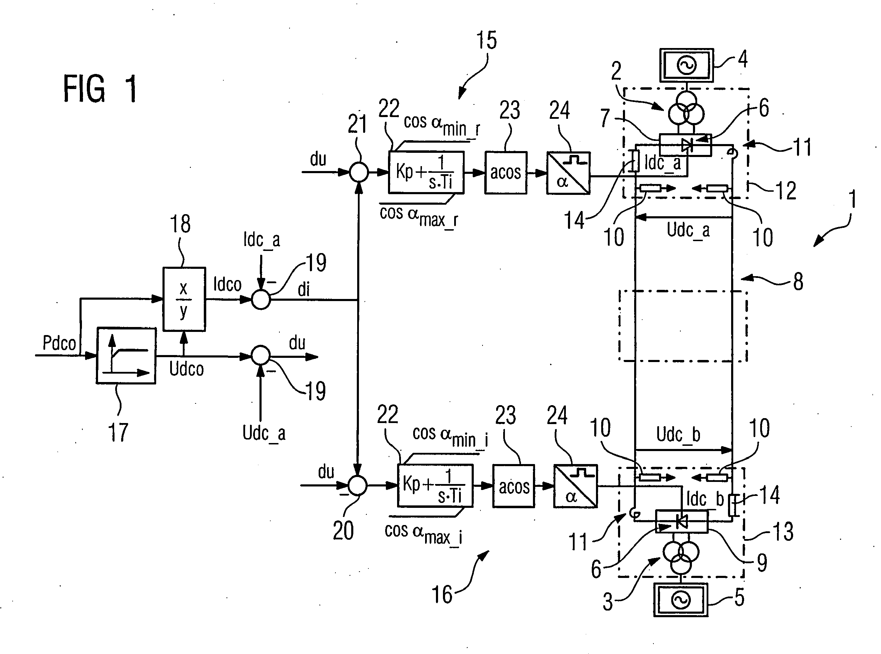

Figur 1 verdeutlicht ein Ausführungsbeispiel des erfindungsgemäßen Verfahrens in einer schematischen Darstellung. So ist eine Hochspannungskurzkupplung 1 gezeigt, zu deren Regelung das gezeigte Ausführungsbeispiel des erfindungsgemäßen Verfahrens vorgesehen ist. Die Hochspannungskurzkupplung 1 umfasst einen ersten Netzanschlusstransformator 2 sowie einen zweiten Netzanschlusstransformator 3, die jeweils zur Kopplung der Hochspannungskupplung 1 mit einem Wechselspannungsnetz 4 beziehungsweise 5 vorgesehen sind. Der erste Netzanschlusstransformator 2 weist eine galvanisch mit dem Wechselspannungsnetz 4 verbundene Primärwicklung auf, die induktiv mit zwei Sekundärwicklungen des Netzanschlusstransformators 2 verbunden sind. Die Sekundärwicklungen der Netzanschlusstransformatoren stellen einen unterschiedlichen Phasenversatz bereit, so dass eine so genannte 12-Puls-Hochspannungskurzkupplung 1 realisiert ist. 12-Puls-Hochspannungskurzkupplungen sind dem Fachmann auf diesem Gebiet bestens bekannt, so dass an dieser Stelle hierauf nicht näher eingegangen zu werden braucht.

Die Sekundärwicklungen der Netanschlusstransformatoren 2,3 sind jeweils mit einer Brückenschaltung aus Thyristorventilen 6 verbunden, die in Figur 1 nur schematisch verdeutlicht sind. Solche Brückenschaltungen sind ebenfalls bestens bekannt. Eine genauere Beschreibung ist daher hier ebenfalls überflüssig. Die Brückenschaltung aus Thyristorventilen 6 ist in dem gezeigten Ausführungsbeispiel gemäß Figur 1 so geregelt, dass ein Gleichrichter 7 realisiert ist. Der Gleichrichter 7 ist über einen Gleichstromkreis 8 mit einem Wechselrichter 9 verbunden, wobei der Gleichstromkreis 8 über Widerstände 10 geerdet ist. Zur Glättung des Gleichstromes sind Glättungsdrosseln 11 vorgesehen, die in den Gleichstromkreis 8 geschaltet sind. Selbstverständlich kann der Umrichter 6 auch als Wechselrichter und der Umrichter 9 als Gleichrichter betrieben werden.

Der erste Netzanschlusstransformator 2, der Gleichrichter 7, eine der Glättungsdrosseln 11 sowie die beiden in Figur 1 oben dargestellten Widerstände sind Teil einer Gleichrichterstation 12, die auch als eine Messstelle bezeichnet werden kann. Eine weitere Messstelle bildet eine Wechselrichterstation 13, in welcher der zweite Netzanschlusstransformator 3, der Wechselrichter 9, eine Glättungsdrossel 11 sowie zwei in Figur 1 unten dargestellte Widerstände 10 angeordnet sind. In der Gleichrichterstation 12 und in der Wechselrichterstation 13 sind Stromwandler 14 angeordnet, die zum Erfassen eines in der Gleichrichterstation 12 fließenden Gleichstromes beziehungsweise eines in der Wechselrichterstation 13 fließenden Gleichstromes eingerichtet sind. Die Stromwandler 14 erzeugen an ihrem Ausgang ein Signal, das zu dem in der Gleichrichterstation beziehungsweise der Wechselrichterstation 13 fließenden Gleichstrom proportional ist. Durch Einsatz geeichter Geräte ist aus dem Messsignal der Gleichstrom bestimmbar. Dar Messsignal wird unter Gewinnung von Abtastwerten mittels einer Abtasteinheit abgetastet und die Abtastwerte unter Gewinnung von Messgleichstromwerten durch einen Analog/DigitalWandler digitalisiert, wobei die Messgleichstromwerte als Messgleichstrom Idc_a bezeichnet werden. Ein der an der Gleichrichterstation 12 abfallenden Gleichspannung proportionales Messsignal wird an den Widerständen 10 erfasst. Auch dieses Signal wird abgetastet und digitalisiert, wobei sich digitale Messgleichspannungswerte ergeben, die hier als Messgleichspannung Udc_a bezeichnet sind.

Bei der Hochspannungskurzkupplung 1 sind der Gleichrichter 7 und der Wechselrichter 9 in unmittelbarer Nähe zueinander aufgestellt, so dass die an der Gleichrichterstation 12 und die an der Wechselrichterstation 13 herrschenden Messgleichspannungen Udc_a und Udc_b im Wesentlichen gleich sind. Der Widerstand des Gleichstromkreises 8 zwischen den besagten Messstellen kann mit anderen Worten vernachlässigt werden. Entsprechendes gilt für die an der Gleichrichterstation 12 und der Wechselrichterstation 13 erfassten Messgleichströme Idc_a beziehungsweise Idc_b. Aus diesem Grunde werden die Messgleichspannung Udc_a und der Messgleichstrom Idc_a sowohl an eine Gleichrichterregelung 15 als auch an eine Wechselrichterregelung 16 übertragen. Selbstverständlich können auch nur die von den Wandlern erfassten Messsignale übertragen werden, wobei die Abtastung und Digitalisierung in der Wechselrichterregelung 16 beziehungsweise in der Gleichrichterregelung 15 durchgeführt werden.

Durch die Regelung der Hochspannungskurzkupplung 1 wird sowohl für den Gleichrichter 7 als auch für den Wechselrichter 9 ein zweckmäßiger Zündwinkel bestimmt. Hierzu gibt der Betreiber eine von ihm gewünschte normierte Sollgleichleistung Pdco vor, die auf eine ebenfalls parametrisierbare Nenngleichleistung normiert ist. Die Sollgleichleistung Pdco wird einem Funktionsgeber 17 sowie einem Divisor 18 zugeführt, wobei der Funktionsgeber 17 auf der Grundlage des Aufbaus und der Auslegung der Hochspannungskurzkupplung 1 über eine vorgegebene Kennlinie verfügt, mit der ausgehend von der eingegebenen Sollgleichleistung Pdco eine Sollgleichspannung Udco bestimmt wird. Mittels des Divisors 18 wird die Sollgleichleistung Pdco durch die so bestimmte Sollgleichspannung Udco unter Gewinnung eines Sollgleichstromes Idco dividiert. Sollgleichspannung Udco und Sollgleichstrom Idco werden jeweils einem Addierer 19 zugeführt, an dessen mit einem Minuszeichen versehenen Negativeingang die erfasste Messgleichspannung Udc_a beziehungsweise der erfasste Messgleichstrom Idc_a anliegen. Mit anderen Worten wird durch die jeweiligen Addierer 19 ein Differenzgleichstrom di beziehungsweise eine Differenzgleichspannung du gebildet. Der Differenzgleichstrom di wird dem positiven Eingang eines Addierers 20 sowie dem positiven Eingang eines Addierers 21 zugeführt. Die Differenzgleichspannung du liegt an einem zweiten positiven Eingang des Addierers 21 an. Mit anderen Worten wird durch den Addierer 21 die Summe aus der Differenzgleichspannung du und dem Differenzgleichstrom di gebildet. Es sei an dieser Stelle noch einmal darauf hingewiesen, dass es sich bei den addierten Werten selbstverständlich um normierte Werte handelt. Mit anderen Worten ist die Messgleichspannung Udc_a auf eine Nenngleichspannung UdcN, der Messgleichstrom Idc_a auf einen Nenngleichstrom IdcN und die Sollgleichleistung Pdco auf einer Nenngleichleistung PdcN normiert.

Die Summe der Differenzgleichspannung du und des Differenzgleichstromes di wird einem PI-Regler 22 zugeführt. Dieser erzeugt zwischen den Grenzwerten cos α_{max_r} und cos α_{min_r} den Kosinus eines Zündwinkels α für die Thyristorventile 6 des Gleichrichters 7. Dabei werden die Thyristorventile 6 so gezündet, dass die Summe der Differenzgleichspannung du und des Differenzgleichstromes di möglichst klein oder mit anderen Worten möglichst gleich Null wird. Dem PI-Regler 22 ist eine acos-Einheit nachgeschaltet, die aus dem Kosinus des Zündwinkels α den Zündwinkel α auf der Grundlage der Arcosinusfunktion bestimmt, wobei ein Zündimpulsgenerator 24 in Abhängigkeit einer figürlich nicht dargestellten netzbestimmten Synchronisierungsspannung und des von der acos-Einheit 23 berechneten Zündwinkels eine Zündung des entsprechenden Thyristorventils des Gleichrichters 7 herbeiführt. Die Wechselrichterregelung 16 ist der Gleichrichterregelung 15 weitgehend entsprechend aufgebaut, wobei jedoch der PI-. Regler 22 der Wechselrichterregelung 16 zwischen dem cos α_{max_i} und dem cos α_{min_i} einen Kosinus des Zündwinkels α auf eine Weise bestimmt, dass die Differenz zwischen dem Differenzgleichstrom und der Differenzgleichspannung möglichst minimal also möglichst gleich Null ist. Aus dem Kosinus des Zündwinkels wird durch die acos-Einheit 23 der Wechselrichterregelung 16 ein Zündwinkel α bestimmt, wobei wieder ein Zündimpulsgenerator 24 die zur Zündung der Thyristorventile 6 des Wechselrichters 9 notwendigen Zündsignale erzeugt.

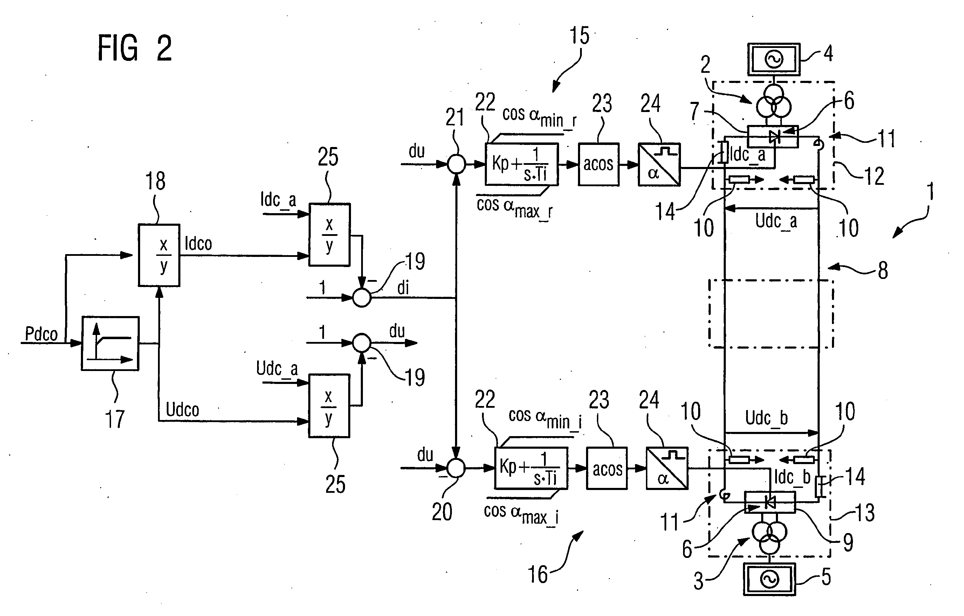

Figur 2 verdeutlicht ein weiteres Ausführungsbeispiel des erfindungsgemäßen Verfahrens. Das gezeigte Ausführungsbeispiel entspricht weitestgehend dem in Figur 1 dargestellten Verfahren, wobei jedoch eine bereits weiter oben beschriebene Umnormierung durchgeführt wird, um auch im Schwachlastbereich ein verbessertes Verhalten der Regelung der Hochspannungskurzkupplung 1 zu ermöglichen. Zunächst wird aus der vom Betreiber als Parameter eingegebenen Sollgleichleistung Pdco mittels des Funktionsgebers 17 eine Sollgleichspannung Udco bestimmt, wobei mittels des Divisors 18 und der Sollgleichleistung Pdco ein Sollgleichstrom Idco bestimmt wird. Der auf diese Weise berechnete Sollgleichstrom Idco dient anschließend zur Umnormierung des Messgleichstromes Idc_a mittels des Umnormierers 25 der auch als Divisor bezeichnet werden kann. Zur Berechnung des Differenzgleichstromes di wird der umnormierte Messgleichstrom von eins abgezogen. Dazu liegt der Ausgang des Umnormierers 25 am negativen Eingang eines Addierers 19 an. Entsprechend wird die Messgleichspannung Udc_a mittels des in Figur 2 unten dargestellten Umnormierers 25 umnormiert. Der Ausgang des in Figur 2 unten dargestellten Umnormierers 25 liegt an dem negativen Eingang des Addierers 19 an, der zur Berechnung der Differenzgleichspannung du die umnormierte Messgleichspannung von der Zahl 1 abzieht. Die auf diese Weise berechnete Differenzgleichspannung du und der auf diese Weise berechnete Differenzgleichstrom di werden wie im Zusammenhang mit Figur 1 beschrieben weiterverarbeitet.

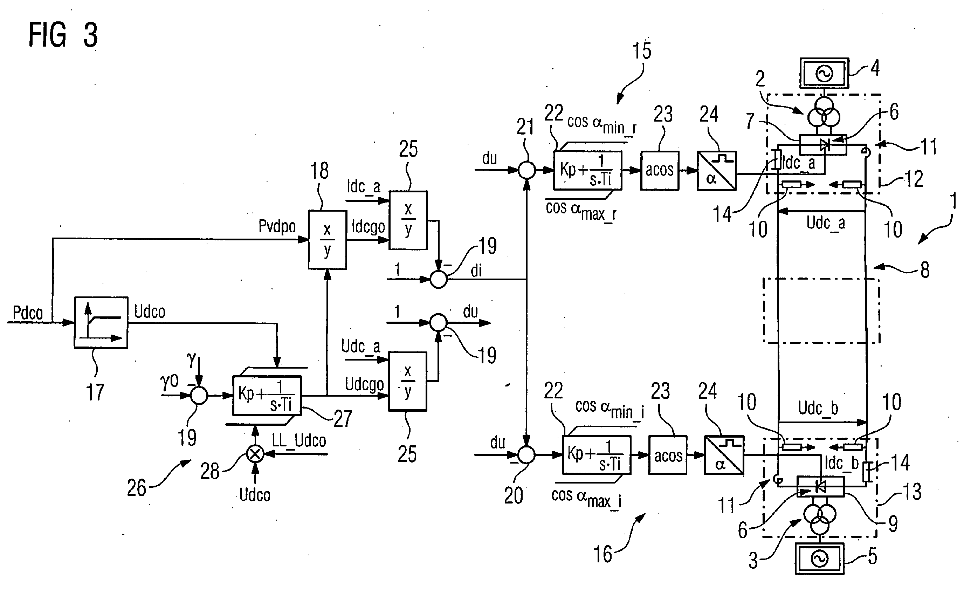

Figur 3 verdeutlicht ein weiteres Ausführungsbeispiel der Erfindung, das dem in Figur 2 gezeigten Ausführungsbeispiel im Wesentlichen entspricht. Im Gegensatz zu dem in Figur 2 gezeigten Ausführungsbeispiel ist jedoch im Rahmen der Wechselrichterregelung 16 eine Gammaregelung 26 vorgesehen, der figürlich nicht dargestellte Mittel aufweist, um einen Messlöschwinkel γ des Wechselrichters 9 zu bestimmten. Ferner ist ein Solllöschwinkel γ₀ vorgesehen, der an dem Negativeingang eines Addierers 19 anliegt und mit anderen Worten von dem Messlöschwinkel γ abgezogen wird. Die Gammaregelung 26 umfasst neben dem Addierer 19 auch einen Gamma-PI-Regler 27 sowie einen Multiplikator 28. Die mit Hilfe des Funktionsgebers 17 berechnete Sollgleichspannung Udco dient als obere Begrenzung für die von dem Gamma-PI-Regler 27 erzeugten Sollspannungswerte auf die anschließend mit Hilfe der Umnormierer 25 umnormiert wird. Die untere Begrenzung wird ebenfalls ausgehend von der Sollgleichleistung Udco bestimmt, wobei ein zuvor eingegebener Parameter LL_Udco mit der Sollgleichspannung Udco multipliziert wird. In dem oben genannten Ausführungsbeispiel ist der LL-Udco gleich 0,7, so dass der Gamma-Regelung 26 nach oben auf die Sollgleichspannung Udco und nach unten auf 70% der Sollgleichspannung Udco begrenzt ist. Durch die Gamma-Regelung 26 können Kommutierungsfehler aufgrund eines zu kleinen Löschwinkels γ vermieden werden. Eine konkurrierende Regelung zwischen Gamma-Regelungen und anderen Regelungsarten ist jedoch vermieden, so dass vorbestimmte Arbeitspunkte gezielt angefahren werden können.

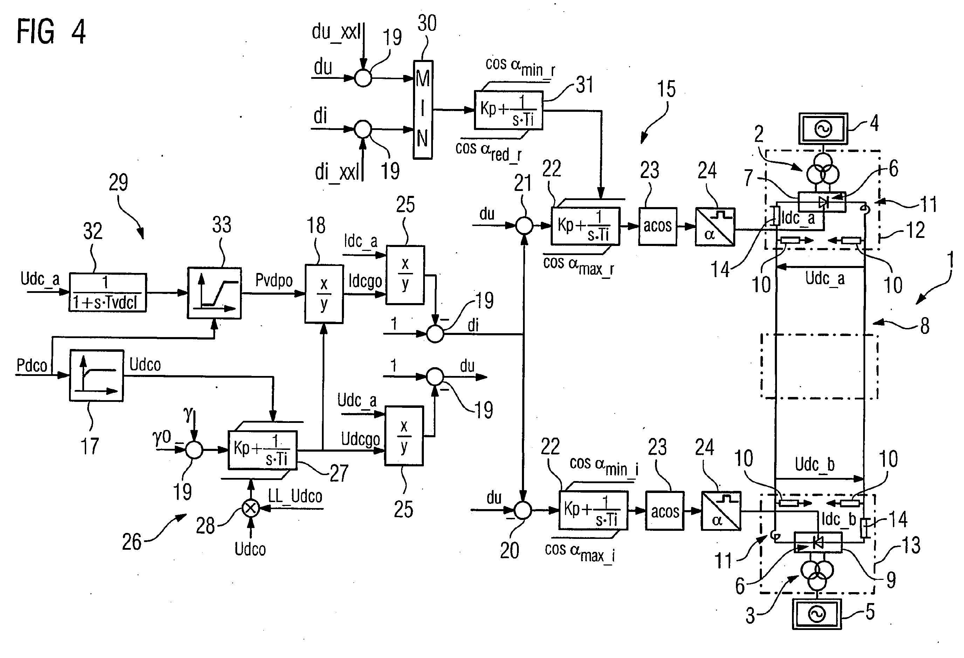

Figur 4 verdeutlicht ein weiteres Ausführungsbeispiel des erfindungsgemäßen Verfahrens, wobei das in Figur 4 gezeigte Verfahren weitestgehend dem in Figur 3 gezeigten Verfahren entspricht. In Figur 4 ist jedoch eine Verbesserung für das Verhalten des Regelverfahrens im Falle eines Spannungseinbruches in einem der Wechselspannungsnetze 4 oder 5 und/oder eines Fehlers im Gleichstromkreis vorgesehen.

Das dargestellte Verfahren führt eine Maximalstrombegrenzung und/oder eine Maximalspannungsbegrenzung durch. Hierzu sind die zwei Addierer 19 sowie eine. Minimalauswahleinheit 30 und ein pI-Regler 31 vorgesehen. Der pI-Regler 31 wirkt über die obere Begrenzung des Gleichrichterreglers 22. Die Addierer 19 addieren eine maximale Differenzspannungsabweichung du_xxl sowie eine maximale Differenzstromabweichung di_xxl der Differenzgleichspannung du beziehungsweise dem Differenzgleichstrom di jeweils hinzu. Überschreitet der Messgleichstrom einen resultierenden Sollstromwert, der sich aus der Summe des Sollgleichstromes Idco und der maximalen Differenzstromabweichung di_xxl berechnet, wird der Messgleichstrom mit Hilfe des pI-Reglers 31 auf den resultierenden Sollstromwert reduziert. Auf entsprechende Weise wird die Messgleichspannung auf den resultierenden Sollspannungswert herabgesetzt. Durch die Minimalauswahleinheit 30 kommt die größte Abweichung zum Zuge. Dazu wird der Ausgang der Minimalauswahleinheit 30 einem PI-Regler 31 zugeführt, der an seinem Ausgang einen Kosinus eines Löschwinkels zwischen cosα_{red_r} und cosα_{min_r} erzeugt. Der Ausgang des PI-Reglers 31 wird zur Begrenzung des PI-Reglers 22 de Gleichrichterregelung 15 nach oben verwendet. Typische Werte für die du_xxl und di_xxl liegen zwischen 0,01 und 0,1. Die Begrenzung α_{red_r} variiert je nach Performance der Hochspannungskurzkupplung zwischen 40° und 50°. Der minimale Löschwinkel des Gleichrichters α_{min_r} beträgt üblicherweise 5°.

Der Fehlerfallmechanismus des dargestellten erfindungsgemäßen Verfahrens umfasst ferner eine Begrenzungseinrichtung 29, die eine Glättungseinheit 32 sowie einen Funktionsgeber 33 umfasst. Durch die Begrenzungseinrichtung 29 wird die ursprünglich geforderte Sollgleichleistung Pdco in Abhängigkeit der gemessenen Messgleichspannung Udc_a zu Pvdpo herabgesetzt. Nach Behebung des Fehlers im Wechselspannungsnetz 4 oder 5 wird zunächst die Gleichspannung im Gleichstromkreis 8 erhöht, bevor die Sollgleichleistung auf den ursprünglichen Wert Pdco hochgefahren wird. Durch das Zusammenspiel der Begrenzungseinheit 29 mit dem pI-Regler 31 werden die an die Hochspannungskurzkupplung 1 angeschlossenen Wechselspannungsnetze 4 oder 5 auch bei einem größeren Spannungseinbruch nicht übermäßig belastet. Stattdessen werden gezielt Arbeitspunkte angefahren und das Verhalten der gesamten Regelung selbst im Fehlerfall verbessert.

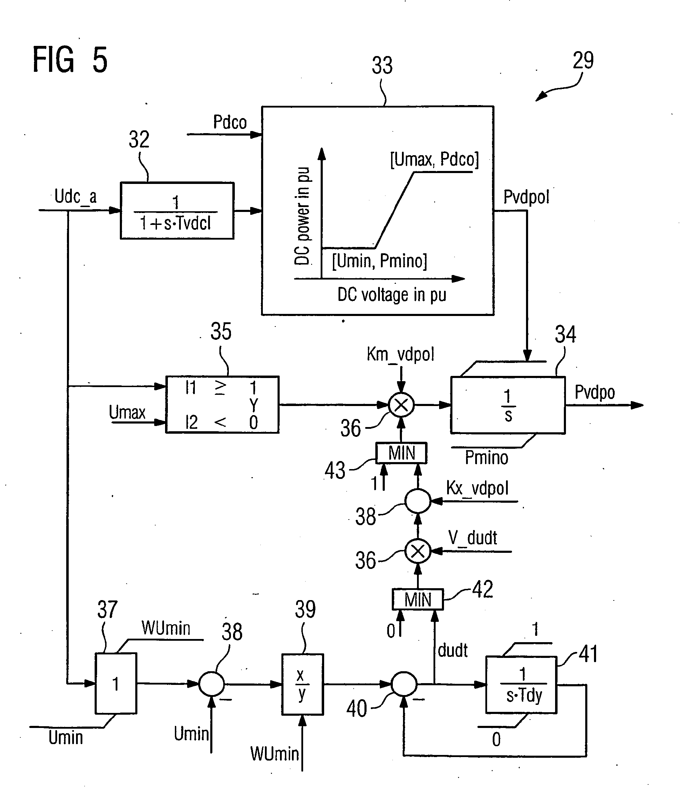

Figur 5 verdeutlicht die Wirkung der Begrenzungseinheit 29 genauer. So wird die Messgleichspannung Udc_a der Glättungseinheit 32 zugeführt, um die bei einem Spannungseinbruch in einem der Wechselspannungsnetze 4 oder 5 oder einem sonstigen Fehlerfall häufig auftretenden Spannungsschwankungen zu glätten und somit in verarbeitbare Messgleichspannungen Udc_a umzuwandeln. Die geglättete Messgleichspannung wird gemeinsam mit der normierten Sollgleichleistung Pdco dem Funktionsgeber 33 zugeführt. Der Funktionsgeber 33 erzeugt an seinem Ausgang eine normierte Fehlerfallbegrenzungsleistung Pvdpol anhand einer auf der Erfahrung des Designers der Hochspannungsgleichstromanlage basierenden Kennlinie. Überschreitet die geglättete Messgleichspannung Udc_a eine Maximalgleichspannung Umax als Schwellenwert, erzeugt der Funktionsgeber 33 an seinem Ausgang die an seinem Eingang anliegende Sollgleichleistung Pdco.

Der Ausgang des Funktionsgebers 33 dient zur Maximalbegrenzung eines Integrators 34, wobei die minimale Ausgangsspannung des Integrators 34 Pmino ist. Ferner ist ein Grenzwertmelder 35 mit zwei Eingängen vorgesehen. An dem ersten Eingang des Grenzwertmelders 35 liegt die Messgleichspannung Udc_a an. An dem zweiten Eingang wird die Maximalspannung U-max des Funktionsgebers 33 eingespeist. Der Grenzwertmelder vergleicht die beiden Eingangswerte. Ist die Messgleichspannuhg Udc_a größer als die Maximalspannung Umax, wie dies üblicherweise im Nennbetrieb der Fall ist, wird der Ausgang Y des Grenzwertmelders 35 gleich Eins gesetzt. Sinkt die Messgleichspannung unter die maximale Spannung Umax ab, wird der Ausgang des Grenzwertmelders hingegen gleich Null. Im Fehlerfall liegt daher eine Null als Faktor des Multiplikators 36 vor, so dass der Integrator 34 in Abhängigkeit des Absinkens der Messgleichspannung an seinem Ausgang Werte, Pvdpo, zwischen der minimalen Leistung Pmino und der maximalen Leistung Pdco erzeugt.

Wie aus Figur 4 hervorgeht, wird in diesem Fall die Bestimmung des Differenzgleichstromes auf Grundlage von Pvdpo durchgeführt.

Nach der Fehlerbeseitigung steigt die Messgleichspannung Udc_a. Dies führt auf Grund der Kennlinie des Funktionsgebers 33 an dessen Ausgang zu einer Erhöhung von Pvdpol. Der Ausgang des Integrators verharrt jedoch zunächst auf den tiefsten Wert Pvdpo, der während des Fehlerfalles vorlag. Meldet jedoch der Vergleicher 35, dass die Messgleichspannung Udc_a einen Schwellenwert Umax überschreitet integriert der Integrator 34 auf den von dem Fünktionsgeber 33 gelieferten Wert Pvdpol hoch. Schließlich stimmen Pdpo, Pvdpol und Pdco miteinander überein, so dass zum Normalbetrieb übergegangen wird.

Die restlichen in Figur 5 gezeigten Komponenten dienen der Verstellbarkeit der Integrationsgeschwindigkeit des Integrators 34 von Pmino bis zum Erreichen der Sollgleichleistung Pdco. Zur Festlegung der Integrationsgeschwindigkeit ist zunächst ein Begrenzer 37 vorgesehen, der überprüft, ob die Messgleichspannung Udc_a in den Bereich zwischen Umin und WUmin fällt. Liegt Udc_a unterhalb von Umin, liegt am Ausgang des Vergleichers 37 Umin an, so dass am Ausgang des nachgeschalteten Addierers 38 der, an dessen negativem Eingang Umin anliegt, ein Nullsignal erzeugt wird. Der Divisor 39 erzeugt an seinem Ausgang daher ebenfalls ein Nullsignal, von dem vorherige Spannungswerte mittels des Addierers 40 abgezogen werden. Die vorherigen Spannungswerte zwischen 0 und 1 werden von der Glättungseinheit 41 erzeugt und liegen dem geschilderten Fall ebenfalls bei Null.

Liegt hingegen die Messgleichspannung Udc_a zwischen den Begrenzungen Umin und WUmin, wird somit eine auf WUmin normierte Differenzspannung am Ausgang des Dividierers 39 erzeugt. Hiervon werden vorhergehende geglättete Spannungswerte mittels des Addierers 40 abgezogen. Der am Ausgang des Addierers 40 erzeugte Wert dudt kann positiv oder negativ sein, je nach dem ob die Messgleichspannung Udc_a ansteigt oder fällt. Durch die anschließende Minimalauswahl 42 wird sichergestellt, dass nur negative dudt-Werte von der Minimalauswahl 42 weitergeleitet werden. Steigt die Spannung, ist das Produkt dudt positiv und die Minimalauswahl 42 gibt eine Null an den Multiplizierer 36 weiter, der diese mit dem vorbestimmten Parameter V_dudt multipliziert und das sich ergebende Produkt, in diesem Fall ebenfalls null, an den Addierer 38 weitergibt, der dieses dann mit dem ebenfalls vorbestimmten Parameter Kx_vdpol aufsummiert. Der Wert Kx_vdpol ist gleich oder größer als eins. Bei abfallender Spannung wird durch eine Minimalauswahl 43 daher sichergestellt, dass ein Wert gleich eins an den Multiplizierer 36 weitergegeben wird, der diese eins mit Ausgang des Grenzwertmelders 35 und dem ebenfalls voreinstellbaren Parameter Km_vdpol multipliziert und schließlich dem Integrator 34 zur Verfügung stellt. Das Produkt Y x km_vdpol x 1 ist gleich Km_vdpol. Der Integrator 34 integriert mit einer eingestellten Normgeschwindigkeit.

Fällt die Messgleichspannung während des Integrationsvorganges auf Grund eines Fehlers oder auf Grund eines schwachen Netzes ist dudt hingegen negativ. Der dudt-Wert wird weitergegeben, mit V_dudt multipliziert und schließlich mittels des Addierers mit Kx_vdpol aufsummiert, so dass an dem Ausgang des Addierers 38 ein Wert kleiner eins entsteht, der schließlich an den Multiplikator 36 weitergegeben wird. Der Integrator 34 erhöht daher mit der neuen Zeitkonstante die an seinem Ausgang liegende Sollleistung Pvdpo langsamer.

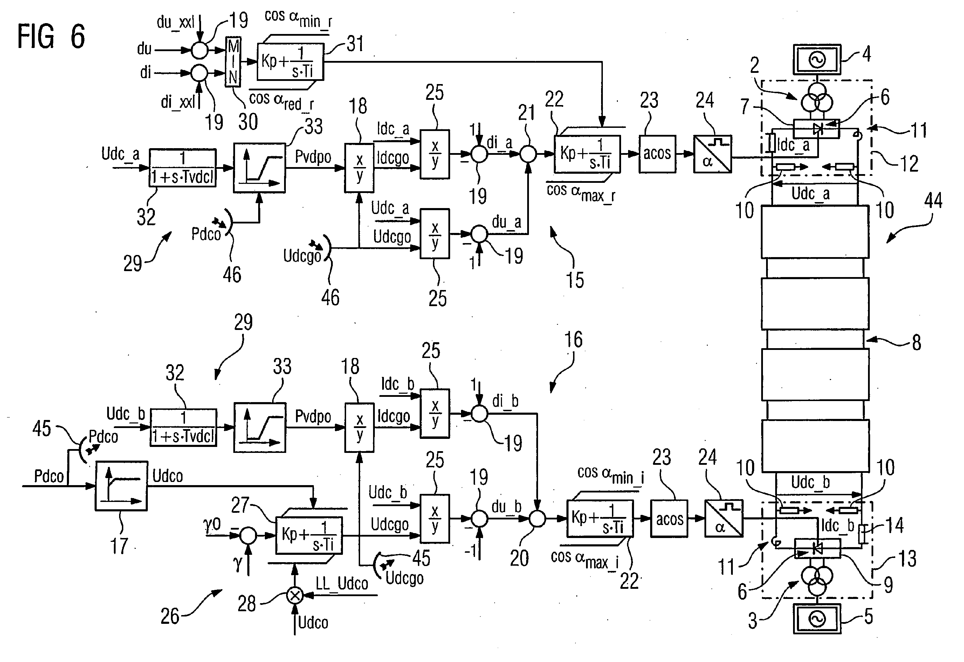

Figur 6 verdeutlicht ein Ausführungsbeispiel des erfindungsgemäßen Verfahrens zur Regelung einer so genannten Hochspannungsgleichstromfernübertragungsanlage 44. Eine solche für Fernübertragungen ausgelegte Hochspannungsgleichstromfernübertragungsanlage 44 umfasst im Wesentlichen die gleichen Bauteile wie die in Figur 1 gezeigte Hochspannungskurzkupplung. Allerdings sind der Gleichrichter 7 und der Wechselrichter 9 in dem gezeigten Ausführungsbeispiel über 600 km entfernt voneinander aufgestellt. Der Gleichstromkreis 8 ist daher durch eine etwa 600 km lange Gleichstromkabelverbindung realisiert. Aufgrund dieser großen Entfernung werden die Messgleichspannung und der Messgleichstrom einmal an der Gleichrichterstation 12 als Messstelle und einmal an der Gleichrichterstation 13 als Messstelle erfasst, wobei die an oder in der Nähe der Gleichrichterstation 12 erfassten Messwerte der Gleichrichterregelung 15 und die an oder in der Nähe der Wechselrichterstation erfassten Messwerte der Wechselrichterregelung 16 zugeführt werden. In dem gezeigten Ausführungsbeispiel wird die Sollgleichspannung Pdco an der Wechselrichterregelung 16 den jeweiligen Bedürfnissen des Betreibers entsprechend bestimmt und durch einen zweckmäßigen Datenfernübertragungsfunksender 45 an einen diesbezüglich angepassten Datenfernübertragungsfunkempfänger 46 gesendet. Wie im Zusammenhang mit den Figuren 1 bis 4 erläutert, wird mittels des Funktionsgebers 17 aus der Sollgleichleistung Pdco eine Sollgleichspannung Udco bestimmt. Diese gilt als Maximalbegrenzung des Gamma-PI-Reglers 27, der in dem gezeigten Ausführungsbeispiel Bestandteil der Wechselrichterregelung 16 ist. Selbstverständlich kann auch die Gleichrichterregelung 15 eine solche Gammaregelung 26 aufweisen, so dass der Leistungsfluss bedarfsweise in beide Richtungen stattfinden kann. Die von dem Gamma-PI-Regler 27 der Gammaregelung 26 erzeugte Ausgangsspannung Udcgo wird anschließend zur Gleichrichterregelung 15 mittels des Datenfernübertragungssenders 45 übertragen, wobei der Gleichrichterregelung die Normspannung durch ein zweckmäßiges Datenfernübertragungsempfangsgerät 46 empfängt. Die restlichen Regelungsschritte entsprechen denjenigen, die bereits im Zusammenhang mit der Hochspannungskurzkupplung gemäß der Figuren 1 bis 5 beschriebenen wurden. Die Begrenzungseinheit 29 kann sowohl bei der Gleichrichterregelung 15 als auch bei der Wechselrichterregelung zum Einsatz gelangen. Der pI-Regler 31 zur Maximalbegrenzung des pI-Reglers 22 der Gleichrichterregelung 15 ist hingegen in der Regel nur bei der Gleichrichterregelung vorgesehen.

## Patentansprüche

1. Verfahren zum Regeln eines Gleichrichters (7) und eines Wechselrichters (9), die über einen Gleichstromkreis (8) miteinander verbunden sind im Bereich der Energieverteilung und -übertragung, bei dem an wenigstens einer Messestelle (12,13) des Gleichstromkreises (8) jeweils eine Messgleichspannung (Udc_a, Udc_b) und jeweils ein Messgleichstrom (Idc_a, Idc_b) gemessen werden und an eine Gleichrichterregelung (15) zur Regelung des Gleichrichters und/oder an eine Wechselrichterreglung (16) zur Regelung des Wechselrichters übertragen werden, wobei die Gleichrichterregelung (15) und die Wechselrichterregelung (16) jeweils die Differenz zwischen einer vorgegebenen Sollgleichspannung (Udco) und der jeweils empfangenen Messgleichspannung (Udc_a, Udc_b) unter Gewinnung einer Differenzgleichspannung (du) und ferner die Differenz zwischen einem Sollgleichstrom (Idco) und dem jeweils empfangenen Messgleichstrom (Idc_a, Idc_b) unter Gewinnung eines Differenzgleichstroms (di) bilden, wobei die Differenzgleichspannung (du) und der Differenzgleichstrom (di) normiert vorliegen und der Gleichrichterregelung (15) den Gleichrichter (7) so regelt, dass die Summe der Differenzgleichspannung (du) und des Differenzgleichstroms (di) minimal wird, und wobei der Wechselrichterregelung (16) den Wechselrichter (9) so regelt, dass die Differenz zwischen dem Differenzgleichstrom (di) und der Differenzgleichspannung (du) minimal wird,
**dadurch gekennzeichnet, dass**
der Sollstrom (Idco) der Gleichrichterregelung (15) und der Sollstrom (Idco) der Wechselrichterregelung (16) identisch sind.

2. Verfahren nach Anspruch 1,
**dadurch gekennzeichnet, dass**
die Sollspannung (Udco) der Gleichrichterregelung (15) und die Sollspannung (Udco) der Wechselrichterregelung (16) identisch sind.

3. Verfahren nach einem der vorhergehenden Ansprüche,
**dadurch gekennzeichnet, dass**
die Regelung des Gleichrichters (7) und des Wechselrichters (9) über den gesamten Arbeitbereich des Gleichrichters (7) beziehungsweise des Wechselrichters (9) hinweg sowohl auf der Grundlage des Differenzgleichstromes di als auch auf der Grundlage der Differenzgleichspannung du erfolgt.

4. Verfahren nach einem der vorhergehenden Ansprüche,
**dadurch gekennzeichnet, dass**
der Gleichrichter (7) und der Wechselrichter (9) unter Ausbildung einer Kurzkupplung (1) räumlich nebeneinander aufgestellt sind, wobei die Messgleichspannung (Udc_a, Udc_b) und der Messgleichstrom (Idc_a, Idc_b) an einer Messstelle (12) erfasst und sowohl an den Gleichrichterregelung (15) als auch an den Wechselrichterregelung (16) übertragen werden.

5. Verfahren nach einem der Ansprüche 1 bis 4,
**dadurch gekennzeichnet, dass**
der Gleichrichter (7) und der Wechselrichter (9) unter Ausbildung einer Gleichstromübertragungsanlage wenigstens 1 Kilometer entfernt voneinander aufgestellt sind, wobei Messgleichspannung und der Messgleichstrom einmal am Gleichrichter (7) unter Gewinnung einer Gleichrichtermessgleichspannung (Udc_a) und eines Gleichrichtermessgleichstromes (Idc_a) und einmal am Wechselrichter (9) unter Gewinnung einer Wechselrichtermessgleichspannung (Udc_b) und eines Wechselrichtermessgleichstromes (Idc_b) erfasst werden, wobei die Gleichrichtermessgleichspannung (Udc_a) und der Gleichrichtermessgleichstrom (Idc_a) an den Gleichrichterregelung (15) und die Wechselrichtermessgleichspannung (Udc_b) und der Wechselrichtermessgleichstrom (Idc_b) an den Wechselrichterregelung (9) übertragen werden.

6. Verfahren nach einem der vorhergehenden Ansprüche,
**dadurch gekennzeichnet, dass**
die Sollgleichspannung (Udco) und der Sollgleichstrom (Idco) aus einer geforderten Sollgleichleistung (Pdco) bestimmt werden.

7. Verfahren nach einem der vorhergehenden Ansprüche,
**dadurch gekennzeichnet, dass**
der auf einen Nennstrom normierte Messgleichstrom (Idc_a, Idc_b) und die auf eine Nennspannung normierte Messgleichspannung (Udc_a, Udc_b) auf den ebenfalls auf den Nennstrom normierten Sollgleichstrom (Idco) beziehungsweise auf die ebenfalls auf die Nennspannung normierte Sollgleichspannung (Udco) umnormiert werden, wobei der Differenzgleichstrom (di) als Differenz zwischen 1 und den auf den Sollgleichstrom normierten Messgleichstrom und die Differenzgleichspannung (du) als Differenz zwischen 1 und der auf die Sollgleichspannung normierten Messgleichspannung berechnet wird.

8. Verfahren nach einem der vorhergehenden Ansprüche,
**dadurch gekennzeichnet, dass**
am Wechselrichter (9) ein Messlöschwinkel (γ) gemessen und an eine Gammaregelung (26) übertragen wird, wobei die Gammaregelung (26) den Messlöschwinkel (γ) mit einem Solllöschwinkel (γ₀) vergleicht und, wenn der Messlöschwinkel (γ) den Solllöschwinkel (γ₀) unterschreitet, einen gegenüber der vorgegebenen Sollgleichspannung herabgesetzten Gleichspannungssollwert (Udcgo) erzeugt, wobei die Wechselrichterregelung (16) anschließend auf den Gleichspannungssollwert (Udcgo) regelt.

9. Verfahren nach einem der vorhergehenden Ansprüche,
**gekennzeichnet durch**
einen Begrenzungsregler (31), der einen Gleichrichterregler (22) der Gleichrichterregelung (15) nach oben begrenzt, so dass ein vorgegebener Maximalstrom und/oder eine vorgegebene Maximalspannung nicht überschritten werden.

10. Verfahren nach Anspruch 9,
**dadurch gekennzeichnet, dass**
der Begrenzungsregler (31) den Gleichrichterregler (22) begrenzt, wenn der Messgleichstrom (Idc_a, Idc_b) größer ist als die Summe aus dem Sollgleichstrom und einer vorbestimmten Differenzgleichstromabweichung (di_xxl) oder wenn die Messgleichspannung (Udc_a) größer ist als die Summe aus der Sollgleichspannung und einer vorbestimmten Differenzgleichspannungsabweichung (du_xxl).

11. Verfahren nach einem der vorhergehenden Ansprüche,
**dadurch gekennzeichnet, dass**
bei abfallender Messgleichspannung (Udc_a) eine Sollgleichleistung (Pdco) in Abhängigkeit der Messgleichspannung (Udc_a) auf einen kleineren Wert unter Gewinnung einer Fehlerfallsollgleichleistung (Pvdpo) herabgesetzt wird, wobei der Sollgleichstrom und/oder die Sollgleichspannung anstatt aus einer Sollgleichleistung (Pdco) aus der Fehlerfallsollgleichleistung (Pvdpo) bestimmt werden.

## Claims

1. Method for controlling a rectifier (7) and an inverter (9) which are connected to one another via a DC circuit (8), in the field of power distribution and transmission, in which a measured DC voltage (Udc_a, Udc_b) and a measured direct current (Idc_a, Idc_b) are in each case measured at at least one measurement point (12, 13) in the DC circuit (8), and are passed to a rectifier control system (15) in order to control the rectifier, and/or to an inverter control system (16) in order to control the inverter, with the rectifier control system (15) and the inverter control system (16) each filming the difference between a predetermined nominal DC voltage (Udco) and the respectively received measured DC voltage (Udc_a, Udc_b), resulting in a difference DC voltage (du) and, furthermore, the difference between a nominal direct current (Idco) and the respectively received measured direct current (Idc_a, Idc_b) resulting in a difference direct current (di), with the difference DC voltage (du) and the difference direct current (di) being in a normalized form and with the rectifier control system (15) controlling the rectifier (7) such that the sum of the difference DC voltage (du) and the difference direct current (di) is minimized, and with the inverter control system (16) controlling the inverter (9) such that the difference between the difference direct current (di) and the difference DC voltage (du) is minimized,
**characterized in that** the nominal current (Idco) through the rectifier control system (15) and the nominal current (Idco) through the inverter control system (16) are identical.

2. Method according to Claim 1,
**characterized in that** the nominal voltage (Udco) in the rectifier control system (15) and the nominal voltage (Udco) in the inverter control system (16) are identical.

3. Method according to one of the preceding claims,
**characterized in that**
the rectifier (7) and the inverter (9) are controlled over the entire operating range of the rectifier (7) and of the inverter (9), respectively, both on the basis of the difference direct current (di) and on the basis of the difference DC voltage (du).

4. Method according to one of the preceding claims,
**characterized in that**
the rectifier (7) and the inverter (9) are installed physically alongside one another forming a back-to-back link (1), with the measured DC voltage (Udc_a, Udc_b) and the measured direct current (Idc_a, Idc_b) being recorded at a measurement point (12) and being transmitted both to the rectifier control system (15) and to the inverter control system (16).

5. Method according to one of Claims 1 to 4,
**characterized in that**
the rectifier (7) and the inverter (9) are installed at least one kilometer away from one another forming a direct-current transmission installation, with the measured DC voltage and the measured direct current being recorded on the one hand at the rectifier (7), resulting in a rectifier measured DC voltage (Udc_a) and a rectifier measured direct current (Idc_a) and on the other hand at the inverter (9), resulting in an inverter measured DC voltage (Udc_b) and an inverter measured direct current (Idc_b), with the rectifier measured DC voltage (Udc_a) and the rectifier measured direct current (Idc_a) being transmitted to the rectifier control system (15), and the inverter measured DC voltage (Udc_b) and the inverter measured direct current (Idc_b) being transmitted to the inverter control system (9).

6. Method according to one of the preceding claims,
**characterized in that**
the nominal DC voltage (Udco) and the nominal direct current (Idco) are determined from the required nominal DC power (Pdco).

7. Method according to one of the preceding claims,
**characterized in that**
the measured direct current (Idc_a, Idc_b), normalized with respect to a rated current, and the measured DC voltage (Udc_a, Udc_b), normalized with respect to a rated voltage, are renormalized with respect to the nominal direct current (Idco), likewise normalized with respect to the rated current, and, respectively, with respect to the nominal DC voltage (Udco), likewise normalized with respect to the rated voltage, with the difference direct current (di) being calculated as the difference between unity and the measured direct current normalized with respect to the nominal direct current, and with the difference DC voltage (du) being calculated as the difference between unity and the measured DC voltage normalized with respect to the nominal DC voltage.

8. Method according to one of the preceding claims,
**characterized in that**
a measured turn-off angle (γ) is measured at the inverter (9) and is transmitted to a gamma control system (26), with the gamma control system (26) comparing the measured turn-off angle (γ) with a nominal turn-off angle (γ₀), and if the measured turn-off angle (γ) is less than the nominal turn-off angle (γ₀), produces a DC voltage nominal value (Udcgo) which is lower than the predetermined nominal DC voltage, with the inverter control system (16) then regulating at the DC voltage nominal value (Udcgo).

9. Method according to one of the preceding claims,
**characterized by**
a limiting regulator (31) which limits a rectifier regulator (22) in the rectifier control system (15) at the top, such that a predetermined maximum current and/or a predetermined maximum voltage are/is not exceeded.

10. Method according to Claim 9,
**characterized in that**
the limiting regulator (31) limits the rectifier regulator (22) when the measured direct current (Idc_a, Idc_b) is greater than the sum of the nominal direct current and a predetermined difference direct-current discrepancy (di_xxl), or when the measured DC voltage (Udc_a) is greater than the sum of the nominal DC voltage and a predetermined difference DC voltage discrepancy (du_xxl).

11. Method according to one of the preceding claims,
**characterized in that**,
when the measured DC voltage (Udc_a) is falling, the nominal DC power (Pdco) is reduced as a function of the measured DC voltage (Udc_a) to a lower value in order to produce a malfunction nominal DC power (Pvdpo), with the nominal direct current and/or the nominal DC voltage being determined from the malfunction nominal DC power (Pvdpo) rather than from the nominal DC power (Pdco).

## Revendications

1. Procédé de réglage d'un redresseur ( 7 ) et d'un onduleur ( 9 ), qui sont reliés entre eux par un circuit ( 8 ) en courant continu dans le domaine de la distribution et de la transmission d'électricité, dans lequel, en au moins un point ( 12, 13 ) de mesure du circuit ( 8 ) en courant continu, on mesure respectivement une tension ( Udc_a, Udc_b ) continue de mesure et respectivement un courant ( Idc_a, Idc_b ) continu de mesure et on les transmet à une régulation ( 15 ) de redresseur pour la régulation du redresseur et/ou à une régulation ( 16 ) d'onduleur pour la régulation de l'onduleur, la régulation ( 15 ) du redresseur et la régulation ( 16 ) d'onduleur formant respectivement la différence entre une tension ( Udco ) continue de consigne prescrite et la tension ( Udc_a, Udc_b ) continue de mesure reçue, en obtenant une tension ( du ) continue de différence et, en outre, la différence entre un courant ( Idco ) continu de consigne et le courant ( Idc_a, Idc_b ) continu de mesure reçu respectivement en obtenant un courant ( di ) continu de différence, dans lequel la tension ( du ) continue de différence et le courant ( di ) continu de différence se présentent sous une forme normée et la régulation ( 15 ) de redresseur règle le redresseur ( 7 ), de manière à minimiser la somme de la tension ( du ) continue de différence et du courant ( di ) de différence et dans lequel la régulation ( 16 ) d'onduleur règle l'onduleur ( 9 ), de manière à minimiser la différence entre le courant ( di ) continu de différence et la tension ( du ) continue de différence,
**caractérisé en ce que**
le courant ( Idco ) de consigne de la régulation ( 15 ) de redresseur et le courant ( Idco ) de consigne de la régulation ( 16 ) d'onduleur sont identiques.

2. Procédé suivant la revendication 1,
**caractérisé en ce que**
la tension ( Udco ) de consigne de la régulation ( 15 ) de redresseur et la tension ( Udco ) de consigne de la régulation ( 16 ) d'onduleur sont identiques.

3. Procédé suivant l'une des revendications précédentes,
**caractérisé en ce que**
la régulation du redresseur ( 7 ) et de l'onduleur ( 9 ) s'effectue sur toute la plage de travail du redresseur ( 7 ) respectivement de l'onduleur ( 9 ) tant sur la base du courant ( di ) continu de différence qu'également sur la base de la tension ( du ) continue de différence.

4. Procédé suivant l'une des revendications précédentes,
**caractérisé en ce que**
le redresseur ( 7 ) et l'onduleur ( 9 ) sont mis l'un à côté de l'autre dans l'espace en formant un accouplement ( 1 ) serré, la tension ( Udc_a, Udc_b ) continue de mesure et le courant ( Idc_a, Idc_b ) continu de mesure étant détectées en un point ( 12 ) de mesure et étant transmises à la fois à la régulation ( 15 ) de redresseur et à la régulation ( 16 ) d'onduleur.

5. Procédé suivant l'une des revendications 1 à 4,
**caractérisé en ce que**
on éloigne d'au moins un kilomètre le redresseur ( 7 ) et l'onduleur ( 9 ) l'un de l'autre en formant une installation de transmission de courant continu, la tension continue de mesure et le courant continu de mesure étant détectés une fois sur le redresseur ( 7 ), en obtenant une tension ( Udc_a ) continue de mesure de redresseur et un courant ( Idc_a ) continu de mesure de redresseur et une fois sur l'onduleur ( 9 ), en obtenant une tension ( Udc_b ) continue de mesure d'onduleur et un courant ( Idc_c ) continu de mesure d'onduleur, la tension ( Udc_a ) continue de mesure de redresseur et le courant ( Idc_a ) continu de mesure de redresseur étant transmis à la régulation ( 15 ) de redresseur et la tension ( Udc_b ) continue de mesure d'onduleur et le courant ( Idc_b ) continu de mesure d'onduleur étant transmis à la régulation ( 9 ) d'onduleur.

6. Procédé suivant l'une des revendications précédentes,
**caractérisé en ce que**
on détermine la tension ( Udco ) continue de consigne et le courant ( Idco ) continu de consigne à partir d'une puissance ( Pdco ) continue de consigne exigée.

7. Procédé suivant l'une des revendications précédentes,
**caractérisé en ce que**
on renorme le courant ( Idc_a, Idc_b ) continu de mesure, normé sur un courant nominal, et la tension ( Idc_a, Idc_b ) continue de mesure, normée sur une tension nominale, sur le courant ( Idco ) continu de consigne, normé également sur le courant nominal, et respectivement sur la tension ( Udco ) continue de consigne, normée également sur la tension nominale, le courant ( di ) continu de différence étant calculé en tant que différence entre 1 et le courant continu de mesure, normé sur le courant continu de consigne, et la tension ( du ) continue de différence étant calculée en tant que différence entre 1 et la tension continue de mesure, normée sur la tension continue de consigne.

8. Procédé suivant l'une des revendications précédentes,
**caractérisé en ce que**
on mesure à l'onduleur ( 9 ) un angle ( γ ) d'extinction de mesure et on le transmet à une régulation ( 26 ) gamma, la régulation ( 26 ) gamma comparant l'angle ( γ ) d'extinction de mesure à un angle ( γ₀ ) d'extinction de consigne et, si l'angle ( γ ) d'extinction de mesure est inférieur à l'angle ( γ₀ ) d'extinction de consigne, produisant une valeur ( Udcgo ) de consigne de tension continue abaissée par rapport à la tension continue de consigne prescrite, la régulation ( 16 ) d'onduleur se réglant ensuite sur la valeur ( Udcgo ) de consigne de tension continue.

9. Procédé suivant l'une des revendications précédentes,
**caractérisé par**
un régleur ( 31 ) de limitation, qui limite vers le haut un régleur ( 22 ) de redresseur de la régulation ( 15 ) de redresseur, de manière à ce qu'un courant maximum prescrit et/ou une tension maximum prescrite ne soit pas dépassé.

10. Procédé suivant la revendication 9,
**caractérisé en ce que**
le régleur ( 31 ) de limitation limite le régleur ( 22 ) de redresseur, si le courant ( Idc_a, Idc_b ) continu de mesure est plus grand que la somme du courant continu de consigne et d'un écart ( di_xxl ) de courant continu de différence déterminé à l'avance ou si la tension ( Udc_a ) continue de mesure est plus grande que la somme de la tension continue de consigne et d'un écart ( du_xxl ) de tension continue de différence déterminé à l'avance.

11. Procédé suivant l'une des revendications précédentes,
**caractérisé en ce que**
lorsque la tension ( Udc_a ) continue de mesure s'abaisse, on diminue une puissance ( Pdco ) continue de consigne en fonction de la tension ( Udc_a ) continue de mesure jusqu'à une valeur plus petite, en obtenant une puissance ( Pvdpo ) continue de consigne en cas d'erreur, le courant continu de consigne et/ou la tension continue de consigne étant déterminé à partir de la puissance ( Pvdpo ) continue de consigne en cas d'erreur au lieu de l'être à partir d'une puissance ( Pdco ) continue de consigne.
